# FASCICULE DE BREVET EUROPEEN

(11) **EP 4 064 579 B1**
(45) Date de publication et mention de la délivrance du brevet: **30.07.2025**
(21) Numéro de dépôt: 22163440.5
(22) Date de dépôt: 22.03.2022
(51) Int. Cl.: H04B 5/00, H04B 5/45, H04B 5/20

(54) **PROCÉDÉ DE MISE EN OEUVRE D'UNE TRANSACTION NFC**
VERFAHREN ZUR UMSETZUNG EINER NFC-TRANSAKTION
METHOD FOR IMPLEMENTING AN NFC TRANSACTION

(30) Priorité: 25.03.2021 FR 2103038
(43) Date de publication de la demande: 28.09.2022
(73) Titulaire: STMicroelectronics (Rousset) SAS, 13790 Rousset (FR)
(72) Inventeur: CORDIER, Nicolas, 13080 AIX-EN-PROVENCE (FR)
(74) Mandataire: Cabinet Beaumont

(56) Documents cités:
- US-A1- 2013 005 242
- US-A1- 2018 240 097

## Description

### Domaine technique

La présente description concerne de façon générale les circuits électroniques et, plus particulièrement, les transpondeurs électromagnétiques ou étiquettes électroniques (tag, en anglais).

La présente description s'applique en particulier aux dispositifs électroniques intégrant un circuit de communication en champ proche (Near-Field Communication - NFC, en anglais), plus communément appelés dispositifs NFC, et à la détection de la présence d'un tel dispositif dans le champ d'un autre dispositif.

### Technique antérieure

Les systèmes de communication à transpondeurs électromagnétiques sont de plus en plus fréquents, en particulier depuis le développement des technologies de communication en champ proche. Ces systèmes exploitent typiquement un champ électromagnétique radiofréquence généré par un dispositif NFC (terminal ou lecteur) pour détecter puis communiquer avec un autre dispositif NFC (carte) situé à portée.

Le document US 2018/240097 décrit un dispositif électronique mettant en œuvre un système pour empêcher des transactions sans fil en double.

Le document US 2013/005242 décrit un dispositif électronique permettant de réduire la durée d'interrogation multi protocole NFC et la consommation d'énergie.

### Résumé de l'invention

Il existe un besoin d'amélioration des dispositifs NFC et de leur procédé de communication.

Un mode de réalisation pallie tout ou partie des inconvénients des dispositifs NFC connus.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un exemple de système de communication en champ proche du type auquel s'appliquent, à titre d'exemple, des modes de réalisation et modes de mise en œuvre décrits ;
la figure 2 représente, de façon schématique et sous forme de blocs, un exemple de circuit de communication en champ proche ;
la figure 3 représente un chronogramme illustrant un mode de fonctionnement d'un dispositif NFC ;
la figure 4 illustre, de façon très schématique, un mode de fonctionnement du système de communication en champ proche illustré en figure 1 ;
la figure 5 illustre de façon très schématique le fonctionnement des modes de réalisation décrits ; et
la figure 6 représente un organigramme illustrant un procédé de transaction entre deux dispositifs NFC.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

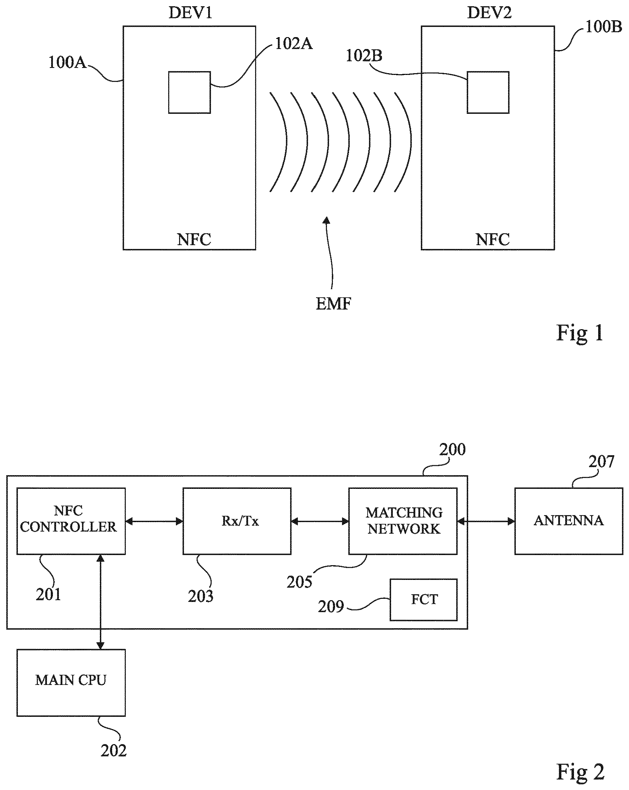

La figure 1 représente, de façon très schématique et sous forme de blocs, un exemple de système de communication en champ proche du type auquel s'appliquent, à titre d'exemple, des modes de réalisation et modes de mise en œuvre décrits.

On suppose arbitrairement le cas de deux dispositifs électroniques similaires, par exemple deux téléphones mobiles, mais ce qui est décrit s'applique plus généralement à tout système dans lequel un lecteur, borne ou terminal rayonne un champ électromagnétique susceptible d'être capté par un transpondeur. Pour simplifier, on fera référence à des dispositifs NFC pour désigner des dispositifs électroniques intégrant un ou plusieurs circuits de communication en champ proche (Near-Field Communication - NFC, en anglais).

Dans l'exemple représenté, un premier dispositif NFC 100A (DEV1) est susceptible de communiquer, par couplage électromagnétique en champ proche (champ EMF), avec un deuxième dispositif NFC 100B (DEV2). Selon les applications, pour une communication, l'un des dispositifs NFC 100A, 100B fonctionne en mode dit lecteur tandis que l'autre dispositif NFC 100B, 100A fonctionne en mode dit carte, ou les deux dispositifs NFC 100A et 100B communiquent en mode dit poste à poste (Peer-to-Peer - P2P, en anglais).

Chaque dispositif NFC 100A, 100B intègre un circuit de communication en champ proche symbolisé, en figure 1, par un bloc 102A, 102B. Les circuits 102A et 102B de communication en champ proche comportent chacun divers éléments ou circuits électroniques de génération ou de détection d'un signal radiofréquence à l'aide d'une antenne (non représentée), par exemple des circuits de modulation ou de démodulation.

La figure 2 représente, de façon schématique et sous forme de blocs, un exemple de circuit 200 de communication en champ proche, l'exemple de circuit 200 pouvant être inclus dans un dispositif 100A, 100B tel que décrit en relation avec la figure 1.

Dans l'exemple représenté, le circuit 200 comporte un contrôleur de communication en champ proche 201 (NFC CONTROLLER), ou contrôleur NFC. Le contrôleur NFC 201 est par exemple une puce électronique ou un circuit électronique adapté à mettre en oeuvre des communications en champ proche.

Dans l'exemple représenté, le contrôleur NFC 201 est relié à une unité centrale 202 (MAIN CPU). L'unité centrale 202 est, par exemple, l'unité centrale du dispositif NFC 100A, 100B et est, généralement, en pratique, un microcontrôleur.

Selon un mode de réalisation non représenté, le contrôleur NFC 201 est relié à un élément de sécurité (secure element).

Dans l'exemple représenté, le contrôleur NFC 201 est relié à un circuit d'émission réception 203 (Rx/Tx) ou tête radiofréquences. Selon un mode de réalisation, le contrôleur 201 et le circuit 203 font partie d'un même circuit intégré. Le circuit 203 est relié à un circuit ou réseau d'adaptation d'impédance 205 (MATCHING NETWORK) comportant des composants externes discrets, lui-même relié à une antenne 207 (ANTENNA).

Le circuit 203 est adapté à convertir les signaux numériques côté contrôleur NFC en signaux analogiques modulés côté antenne, et inversement. Le circuit d'adaptation d'impédance 205 est typiquement configuré pour maximiser l'amplitude des signaux susceptibles d'être émis ou reçus par le contrôleur NFC 201. De manière générale, le circuit 205 est notamment conçu pour s'adapter à des propriétés électriques de l'antenne 207.

Le circuit de communication en champ proche 200 peut en outre comporter d'autres éléments, comme une ou plusieurs mémoires volatiles ou non volatiles, ou divers circuits mettant en oeuvre d'autres fonctions, symbolisés en figure 2 par un unique bloc 209 (FCT).

Lors d'une communication entre les dispositifs NFC 100A et 100B (figure 1), le signal radiofréquence généré par l'un des dispositifs NFC est capté par l'autre dispositif NFC se trouvant à portée.

On considère arbitrairement, comme illustré en figure 1, que le premier dispositif NFC 100A émet un champ électromagnétique (EMF) pour initier une communication avec le deuxième dispositif NFC 100B. Le champ EMF est capté par le deuxième dispositif NFC 100B, et plus particulièrement par son antenne 207. Il se forme alors un couplage entre les circuits oscillants respectifs des dispositifs NFC. Ce couplage se traduit par une variation de la charge constituée par les circuits du dispositif NFC 100B sur le circuit oscillant de génération du champ EMF du dispositif NFC 100A.

En pratique, pour une communication, une variation correspondante de phase et/ou d'amplitude du champ émis est détectée par le dispositif 100A, qui entame alors un protocole de communication NFC avec le dispositif 100B.

Une fois que le dispositif NFC 100A a détecté la présence du dispositif NFC 100B dans son champ, il entame une procédure d'établissement de communication mettant en œuvre des émissions de requêtes par le dispositif NFC 100A et de réponses par le dispositif NFC 100B.

Dans les applications visées par la présente description, lorsqu'un dispositif NFC n'est pas en cours de communication, il est commuté en mode dit basse consommation (low power, en anglais), ou mode veille, afin de réduire l'énergie consommée. Lorsqu'un dispositif NFC est en mode veille, il reste capable de détecter la présence d'un champ généré par un lecteur (en étant réveillé par celui-ci). Toutefois, il n'émet alors pas de trames d'interrogation (polling, en anglais) pour détecter une carte à portée.

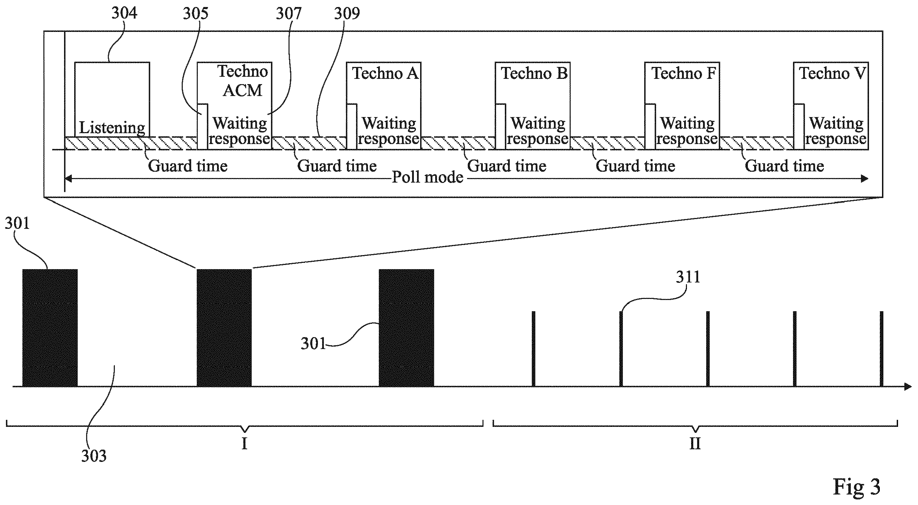

La figure 3 représente un chronogramme illustrant un mode de fonctionnement d'un dispositif NFC.

Le chronogramme illustré en figure 3 comprend deux parties I et II successives, la partie I correspondant à un fonctionnement lorsque le dispositif sondeur (poller, en anglais) est en mode normal et la partie II correspondant à un fonctionnement lorsque le dispositif sondeur est en mode veille.

Selon le mode de réalisation illustré en figure 3, en mode normal (partie I), le dispositif sondeur émet des trames périodiques 301 d'interrogation, pendant lesquelles il génère un champ à destination de dispositifs en mode carte qui se situent à portée (Poll mode). Les trames 301 sont espacées d'intervalles 303 pendant lesquels le dispositif est en mode écoute (listener, en anglais) d'un dispositif en mode lecteur à portée duquel il se trouve.

A titre d'exemple, chaque trame 301 commence par une interrogation 304 (Listening) lors de laquelle le dispositif sondeur interroge son environnement afin de savoir si une carte suivant un protocole de "étiquette parle en premier" (TTF, de l'anglais Tag Talk First) est à portée.

L'interrogation de la carte est suivie de plusieurs salves d'émission (burst, en anglais) 305. Une même trame 301 est, par exemple, constituée d'une succession de cinq salves d'émission 305 chacune configurée dans un type de technologie de modulation différent. En d'autres termes, lors d'une trame 301, le dispositif sondeur met en oeuvre successivement cinq salves d'émission 305 chacune représentative d'un type de technologie de modulation. Ces salves 305 permettent de savoir si une carte de la technologie considérée est à portée.

Les types de technologies visées par les salves 305 sont des technologies du type lecteur parle d'abord (RTF, de l'anglais "Reader Talk First") et sont successivement la technologie ACM (Techno ACM), les deux types A (Techno A) et B (Techno B) de la norme ISO 14443, le type FeliCa 212 kbps ou 424 kbps (Techno F) de la norme ISO 18092 et la technologie connue sous l'appellation "Vicinity cards" ou norme ISO 15693 (Techno V).

Les deux types A et B correspondent à la technologie associée à la norme ISO IEC FDIS 14443-2:2020 "Radio frequency power and signal interface" dans laquelle :
a. le type A est caractérisé par le fait que le lecteur utilise une modulation par déplacement d'amplitude (ASK, de l'anglais "Amplitude Shift Keying") à 100% et un codage de bit de Miller modifié, et
b. le type B est caractérisé par le fait que le lecteur utilise une modulation par déplacement d'amplitude à 10% et un codage de bit sans retour à zéro (NRZ, de l'anglais "Non Return to Zero").

Les deux types Felica 212 kbps et Felica 424 kbps correspondent à la technologie associée à la norme ISO IEC 18092:2013 "Information technology - telecommunication and information exchange between systems - Near Fields communication - interface and protocol (NFCIP-1)" dans laquelle :
a. le type Felica 212 kbps est caractérisé par le fait que le lecteur utilise la modulation d'amplitude par déplacement à 10% et un codage de bit par Manchester, et
b. le type Felica 424 kbps est caractérisé par le fait que le lecteur utilise la modulation d'amplitude par déplacement à 10% et un codage de bit par Manchester et que la période de bit est divisée par deux.

Selon le mode de mise en oeuvre illustré en figure 3, chacune des salves d'émission 305 est suivie par un temps d'attente 307 (Waiting response). Lors du temps d'attente 307, le dispositif sondeur attend la réponse d'un dispositif NFC dans son champ. Si le dispositif sondeur détecte une réponse après l'une des salves 305, cela signifie qu'un dispositif de la technologie de la salve considérée est présent dans le champ. Si le dispositif sondeur ne détecte pas de réponse après l'une des salves 305, cela signifie qu'il n'y a pas de dispositif de la technologie de la salve considérée dans le champ.

Chacune des cinq salves 305 est précédée d'un intervalle de garde 309 (Guard time) lors duquel le dispositif sondeur configure le protocole de ladite salve 305 dans la technologie souhaitée.

Selon le mode de réalisation illustré en figure 3, lorsque le dispositif est en mode veille (partie II), il "sonde" son environnement par de brèves impulsions d'émission périodiques 311. Deux impulsions 311 sont, par exemple, séparées par un intervalle 303 similaire à celui du fonctionnement en mode normal. Une impulsion 311 correspond à une courte émission de champ par le dispositif sondeur pour détecter un éventuel dispositif configuré en mode carte présent dans son champ. En cas d'une telle détection, le dispositif sondeur sort alors de veille puis bascule en mode normal. La détection met en oeuvre une analyse des grandeurs électriques propres à ces impulsions comme l'amplitude ou la phase, ces grandeurs variant si un dispositif configuré en mode carte est à proximité.

Selon un mode de réalisation, chaque trame 301 a une durée comprise entre 60 ms et 80 ms et chaque impulsion 311 a une durée de l'ordre de 30 µs.

Lors des trames 301 et des impulsions 311, la détection d'un champ émis par un dispositif configuré en mode lecteur à proximité est impossible.

Selon un exemple d'application, les modes de réalisation décrits visent les systèmes de transport et, plus particulièrement, la validation de titres de transport stockés dans un téléphone par exemple un téléphone intelligent (smartphone, en anglais). Ainsi, dans cet exemple d'application, le premier dispositif NFC est un téléphone et le deuxième dispositif NFC est une borne ou un terminal de validation ou de lecture de titres de transport.

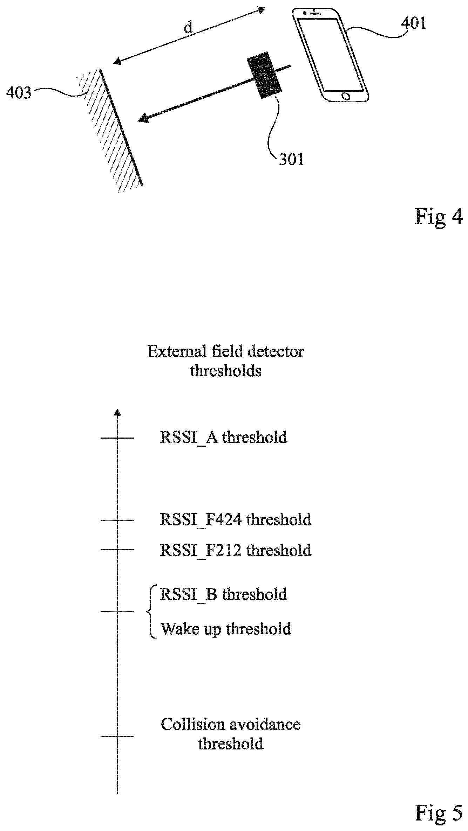

La figure 4 illustre, de façon très schématique, un mode de fonctionnement du système de communication en champ proche illustré en figure 1.

Plus particulièrement, la figure 4 illustre un système de communication en champ proche comprenant un téléphone 401 et une borne de validation 403.

En pratique, lors de la validation d'un titre de transport, un utilisateur approche son téléphone 401 de la borne de validation 403. Le téléphone 401 est à l'écoute de son environnement. Le téléphone 401 met en oeuvre le fonctionnement décrit en relation avec la figure 3.

On suppose que la borne de validation 403 est à portée du téléphone 401 lorsque l'écart entre les deux dispositifs est inférieur ou égal à une distance d, c'est-à-dire que l'on suppose que le niveau de signal de la borne de validation 403 reçu par le téléphone 401 dépasse un certain seuil appelé par la suite seuil de sortie de veille. Le seuil de sortie de veille est, par exemple, défini et stocké dans la mémoire interne du téléphone 401.

Toutefois, même lorsqu'il est à portée de la borne 403, le téléphone 401 ne peut pas la détecter pendant les trames 301. La détection de la borne de validation 403 par le téléphone 401 est alors retardée d'une durée correspondant approximativement à celle d'une trame 301.

Ce décalage provoque un retard dans l'établissement de la communication entre le téléphone 401 et la borne de validation 403.

Pour pallier ce problème, on pourrait penser :
- interrompre une trame d'interrogation 301 lorsque le téléphone 401 détecte, hors des phases d'émission, une intensité de signal reçu supérieure à un seuil d'anticollision (inférieur au seuil de sortie de veille) ;
- basculer le téléphone 401 en mode carte et établir une communication lorsque le téléphone 401 détecte une intensité de signal reçu supérieure à un seuil de sortie de veille ; puis
- détecter le type de technologie de la borne 403.

Toutefois, on serait alors conduit à se baser sur la technologie dont le rapport signal-bruit ou SNR (de l'anglais "Signal-to-Noise Ratio"), permettant de décoder correctement toute réponse reçue de la carte, est le plus élevé pour calculer le seuil de sortie de veille, la technologie de la borne 403 n'étant pas connue lors de l'établissement de la communication. Cela conduirait en pratique à choisir le type A de la technologie 14443.

Les modes de réalisation décrits ci-après prévoient d'éviter le choix du pire cas et de paramétrer le seuil d'établissement de communication en fonction du type de technologie de la borne 403.

La figure 5 illustre, de façon très schématique, le fonctionnement des modes de réalisation décrits.

Plus particulièrement, les modes de réalisation prévoient :
- lorsque la valeur du champ externe détecté (External field detector thresholds) dépasse un seuil d'anticollision (Collision avoidance threshold), d'interrompre le mode lecteur ce qui a pour effet d'empêcher toute émission de champ que ce soit selon une trame 301 ou une trame 311 (figure 3) mise en oeuvre par le téléphone 401 ;
- lorsque la valeur du champ externe détecté dépasse un seuil de sortie de veille (Wake up threshold), de sortir le téléphone 401 (figure 4) du mode veille et de le basculer en mode carte, le seuil de sortie de veille étant basé sur l'une des technologies 14443 type B, 18092 type Felica 212 kbps ou 18092 type Felica 414 kbps ;
- de déterminer la technologie de la borne 403 (figure 4) ;
- de paramétrer un seuil de communication en fonction de la technologie de la borne 403 ; et
- lorsque la valeur du champ externe détecté dépasse le seuil de communication préalablement paramétré (RSSI_B threshold, RSSI_F212 threshold, RSSI_F424 threshold, RSSI_A threshold), d'entamer une transaction avec la borne 403, en suivant le protocole de la technologie de la borne 403.

Le seuil de communication est, de préférence, un seuil minimal pour qu'une transaction puisse s'opérer dans la technologie considérée.

A titre d'exemple, pour tous les types de technologie de la borne, le seuil de sortie de veille correspond au seuil de communication du type de technologie la plus performante en termes de rapport signal sur bruit nécessaire pour son décodage par le lecteur, c'est-à-dire le type de technologie qui nécessite la plus petite valeur du rapport signal sur bruit. A titre d'exemple, pour tous les types de technologie de la borne, le seuil de sortie de veille correspond au seuil de communication du type Felica 212 kbps ou 424 kbps de la technologie 18092 ou du type B de technologie 14443. De préférence, le seuil de sortie de veille correspond au seuil de communication du type B de technologie 14443.

Ainsi, grâce à la détermination de la technologie de la borne 403, préalablement à la communication, par le téléphone 401 et au paramétrage du RSSI requis pour la technologie de la borne 403, il est désormais possible de démarrer une communication sans attendre le pire cas.

Les modes de réalisation permettent alors un gain de temps dans l'établissement de la communication entre le téléphone 401 et la borne 403. En particulier, le gain de temps est d'autant plus important que le rapport signal sur bruit de la technologie de la borne 403 est faible. A titre d'exemple, le gain de temps pour l'établissement d'une communication entre le téléphone 401 et une borne 403 du type B de la technologie 14443 sera plus important que le gain de temps pour l'établissement d'une communication entre le téléphone 401 et une borne 403 de la technologie 18092 FeliCa 212 kbps ou 424 kbps.

Les modes de réalisation permettent en outre d'éviter les erreurs de communication en limite de portée. En effet, une communication n'est établie qui si le niveau de signal le permet pour une technologie donnée.

Plus généralement, ce qui vient d'être exposé en relation avec la validation de titres de transport s'applique à tout type d'applications dans lesquelles des problèmes similaires se posent, par exemple, les applications de paiement sans contact, la lecture d'informations produits, le contrôle d'accès, etc. Pour toutes ces applications, la rapidité de la communication entre les dispositifs est importante.

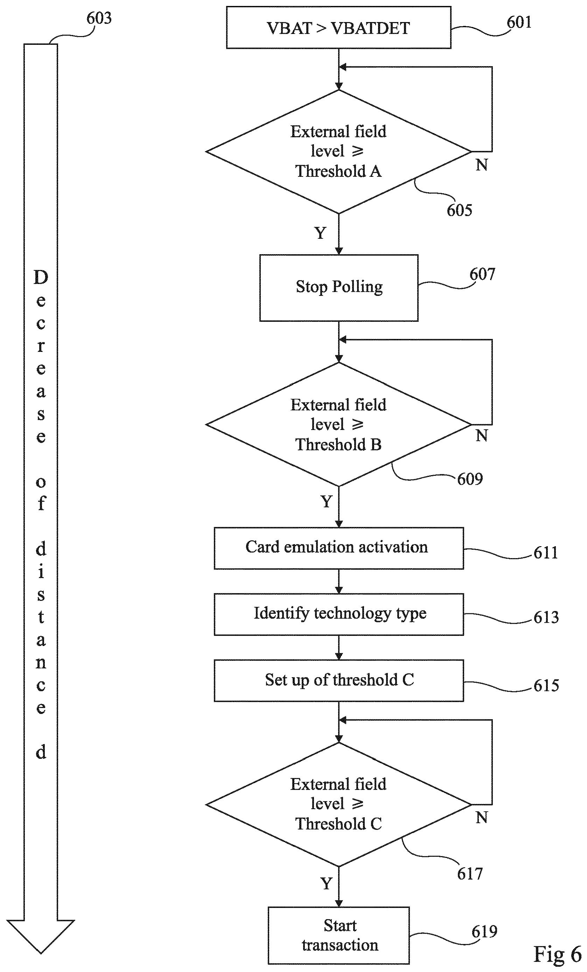

La figure 6 représente un organigramme illustrant un procédé de transaction entre deux dispositifs NFC.

L'organigramme illustré en figure 6 commence par une étape au cours de laquelle on vérifie si (Bloc 601, VBAT > VBATDET) la batterie du téléphone (VBAT) a une charge supérieure à une valeur de batterie limite déterminée préalablement (VBATDET) et stockée dans la mémoire interne du téléphone. La valeur de batterie limite est, par exemple, comprise entre 2,4 V et 3,2 V. La valeur de batterie limite est, par exemple, configurable par pas de 0,2 V. Cette condition est, par exemple, vérifiée par un circuit de supervision de la tension VBAT présent dans le téléphone.

A la suite de l'étape 601, l'organigramme décrit en figure 6 se déroule au fur et à mesure que la distance d (figure 4), représentative de la distance entre le téléphone et la borne, décroît (bloc 603, Decrease of distance d). Le présent procédé repose sur la détection du champ externe et de sa valeur lors de la décroissance de la distance d.

Si, après l'étape 601, le téléphone sort de la portée de la borne de validation à un moment quelconque, c'est-à-dire si le téléphone s'éloigne de la borne de validation de sorte que la borne ne soit plus à portée du téléphone, le téléphone se remet dans une phase dite de polling mettant en oeuvre le fonctionnement décrit en relation avec la figure 3.

L'étape 601 est autrement suivie par une boucle au cours de laquelle le champ externe détecté RSSI (de l'anglais "Received Signal Strength Indicator") est contrôlé jusqu'à ce que la valeur du champ soit supérieure ou égale à la valeur d'un seuil dit seuil d'anticollision ou seuil A (bloc 605, External field level ≥ Threshold A). Tant que la valeur du champ externe détecté reste inférieure à la valeur du seuil A (sortie N du bloc 605), le téléphone reste dans l'état dit de polling. Dès que, le téléphone se rapprochant de la borne, la valeur du champ externe détecté dépasse la valeur du seuil A (sortie Y du bloc 605), le téléphone arrête sa phase dite de polling (bloc 607, Stop Polling).

L'étape 607 est suivie par une boucle au cours de laquelle le champ externe détecté est contrôlé jusqu'à ce que sa valeur soit supérieure ou égale à la valeur d'un seuil dit seuil de sortie de veille ou seuil B (bloc 609, External field level ≥ Threshold B). Tant que la valeur du champ externe détecté reste inférieure à la valeur du seuil B (sortie N du bloc 609), le téléphone reste en veille. Dès que, le téléphone se rapprochant de la borne, la valeur du champ externe détecté dépasse la valeur du seuil B (sortie Y du bloc 609), le téléphone passe dans un mode émulation carte (bloc 611, Card emulation activation).

L'étape 611 est suivie par une étape 613 au cours de laquelle le type de technologie de la borne est identifiée (Identify technology type), à partir de la trame d'interrogation reçue de la borne. L'identification du type de technologie de la borne permet alors de paramétrer, lors d'une étape 615, le seuil de communication ou seuil C en fonction de celle-ci (Set up of threshold C) à partir duquel le téléphone va répondre à la borne. Le seuil C est paramétré à partir de valeurs stockées dans la mémoire non-volatile de l'unité centrale 202 du téléphone. En effet, pour chaque type de technologie de modulation des bornes de validation, une valeur du seuil C est stockée dans la mémoire non-volatile du téléphone.

L'étape 615 est suivie par une boucle au cours de laquelle le champ externe détecté est contrôlé jusqu'à ce que sa valeur soit supérieure ou égale à la valeur du seuil C (bloc 617, External field level ≥ Threshold C). Tant que la valeur du champ externe détecté reste inférieure à la valeur du seuil C (sortie N du bloc 617), la communication ou la transaction entre le téléphone et la borne n'est pas établie (la borne continue à émettre des trames d'interrogation). Dès que, le téléphone se rapprochant de la borne, la valeur du champ externe détecté dépasse la valeur du seuil C (sortie Y du bloc 617), le téléphone entame une communication ou une transaction avec la borne dans le protocole correspondant au protocole du type de technologie de la borne (bloc 619, Start transaction). Le seuil de communication étant basé sur le type de technologie de la borne, la communication est activée le plus tôt possible au cours du mouvement du téléphone vers la borne. Cette rapidité participe à réduire le nombre de communications incomplètes.

A titre d'exemple, le seuil C correspond à un premier seuil, le seuil B correspond à un deuxième seuil et le seuil A correspond à un troisième seuil.

Un avantage des modes de réalisation et des modes de mise en ouvre décrits est qu'ils permettent un gain de temps dans l'établissement de communication entre un premier dispositif NFC et un deuxième dispositif NFC configuré en mode lecteur.

Un autre avantage des modes de réalisation et des modes de mise en oeuvre décrits est qu'ils permettent l'établissement d'une communication dans le protocole de la technologie du dispositif configuré en mode lecteur.

Encore un autre avantage des modes de réalisation et des modes de mise en oeuvre décrits est qu'ils permettent de réduire le nombre de communications incomplètes.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Procédé mis en oeuvre par un premier dispositif de communication en champ proche, NFC (401), d'établissement (619) d'une transaction avec un deuxième dispositif NFC (403) configuré en mode lecteur, comprenant, dans l'ordre :
- une étape de sortie d'un mode d'interrogation (607) de son environnement, dans lequel est le premier dispositif NFC, initialement configuré en mode lecteur, lorsque le niveau de signal, reçu du deuxième dispositif NFC, atteint un premier seuil (A);
- une étape de commutation (611) du premier dispositif dans un mode carte lorsque le niveau de signal reçu atteint un deuxième seuil (B), supérieur au premier seuil (A);
- une étape de détermination (613), par le premier dispositif (401), du type de technologie de modulation du deuxième dispositif (403) parmi plusieurs types de technologie de modulation ; et
- une étape de comparaison du niveau du signal reçu par le premier dispositif (401) à un troisième seuil (C), fonction du type de technologie de modulation du deuxième dispositif (403), la communication étant établie lorsque le niveau du signal est supérieur au troisième seuil.

2. Premier dispositif (401) configuré pour effectuer dans l'ordre les étapes suivantes : -
sortir d'un mode d'interrogation de son environnement dans lequel il est en mode lecteur lorsque le niveau de signal reçu d'un deuxième dispositif de communication en champ proche, NFC, configuré en mode lecteur, atteint un premier seuil (A) ; - commuter dans un mode carte lorsque le niveau de signal reçu du deuxième dispositif NFC atteint un deuxième seuil (B), supérieur au premier seuil (A), - déterminer le type de technologie de modulation du deuxième dispositif NFC (403), parmi plusieurs types de technologie de modulation; -
comparer le niveau du signal reçu à un troisième seuil (C) fonction du type de technologie de modulation du deuxième dispositif NFC (403), et
établir une transaction (619), avec le deuxième dispositif NFC (403) lorsque le niveau du signal reçu par le premier dispositif, configuré en mode carte, atteint un troisième seuil (C).

3. Procédé selon la revendication 1, ou premier dispositif selon la revendication 2, dans lequel le troisième seuil (C) correspond à un seuil d'indicateur d'intensité du signal reçu.

4. Procédé selon la revendication 1 ou 3, ou premier dispositif selon la revendication 2 ou 3, dans lequel une valeur du troisième seuil (C), pour chaque type de technologie de modulation du deuxième dispositif, est stockée dans une mémoire non-volatile du premier dispositif (401).

5. Procédé selon l'une quelconque des revendications 1, 3 et 4, ou premier dispositif selon l'une quelconque des revendications 2 à 4, dans lequel l'établissement est précédé par une étape de détection, par le premier dispositif (401), d'un champ émis par le deuxième dispositif NFC configuré en mode lecteur.

6. Procédé ou premier dispositif selon la revendication 5, dans lequel l'étape de détermination (613) intervient avant l'étape de détection.

7. Procédé ou premier dispositif selon l'une quelconque des revendications 1 à 6, dans lequel le deuxième seuil (B) est inférieur au troisième seuil (C).

8. Procédé ou premier dispositif selon l'une quelconque des revendications 1 à 7, dans lequel le deuxième seuil (B) correspond au seuil du type B de la technologie ISO 14443.

9. Procédé ou premier dispositif selon l'une quelconque des revendications 1 à 7, dans lequel le deuxième seuil (B) correspond à un seuil du type Felica 212kbps ou 424kbps de la technologie 18092.

10. Procédé selon l'une quelconque des revendications 1, 3 à 9 ou premier dispositif selon l'une quelconque des revendications 2 à 9, dans lequel le deuxième dispositif (403) est du type B de la technologie ISO 14443, le troisième seuil (C) correspondant à un seuil minimal de signal requis pour l'établissement d'une transaction dans le type B de la technologie ISO 14443.

11. Procédé selon l'une quelconque des revendications 1, 3 à 9 ou premier dispositif selon l'une quelconque des revendications 2 à 9, dans lequel le deuxième dispositif (403) est du type A de la technologie ISO 14443, le troisième seuil (C) correspondant à un seuil minimal de signal requis pour l'établissement d'une transaction dans le type A de la technologie ISO 14443.

12. Procédé selon l'une quelconque des revendications 1, 3 à 9 ou premier dispositif selon l'une quelconque des revendications 2 à 9, dans lequel le deuxième dispositif (403) est du type FeliCa 212 kbps de la technologie 18092, le troisième seuil (C) correspondant à un seuil minimal de signal requis pour l'établissement d'une transaction dans le type FeliCa 212 kbps de la technologie 18092.

13. Procédé selon l'une quelconque des revendications 1, 3 à 9 ou premier dispositif selon l'une quelconque des revendications 2 à 9, dans lequel le deuxième dispositif (403) est du type FeliCa 424 kbps de la technologie 18092, le troisième seuil (C) correspondant à un seuil minimal de signal requis pour l'établissement d'une transaction dans le type FeliCa 424 kbps de la technologie 18092.

14. Procédé selon l'une quelconque des revendications 1, 3 à 13 ou premier dispositif selon l'une quelconque des revendications 2 à 13, dans lequel le premier dispositif (401) est un smartphone.

15. Procédé selon l'une quelconque des revendications 1, 3 à 14 ou premier dispositif selon l'une quelconque des revendications 2 à 14, dans lequel le deuxième dispositif (403) est un terminal de lecture de titres de transport.

## Patentansprüche

1. Ein Verfahren, das durch eine erste Nahfeldkommunikations-NFC-Vorrichtung (401) implementiert wird, zum Einrichten (619) einer Transaktion mit einer zweiten NFC-Vorrichtung (403), die im Lesemodus konfiguriert ist, aufweisend, in der Reihenfolge:
- einen Schritt (607) des Anhaltens eines Modus zur Abfrage ihrer Umgebung, in der sich die erste NFC-Vorrichtung befindet, die zunächst im Lesemodus konfiguriert ist, wenn der Signalpegel, der von der zweiten NFC-Vorrichtung empfangen wird, einen ersten Schwellenwert (A) erreicht;
- einen Schritt des Umschaltens (611) der ersten Vorrichtung in einen Kartenmodus, wenn der empfangene Signalpegel einen zweiten Schwellenwert (B) erreicht, der höher als der erste Schwellenwert (A) ist;
- einen Schritt des Bestimmens (613), durch die erste Vorrichtung (401), des Typs der Modulationstechnologie der zweiten Vorrichtung (403) aus mehreren Typen von Modulationstechnologie; und
- einen Schritt des Vergleichens des Pegels des Signals, das von der ersten Vorrichtung (401) empfangen wird, mit einem dritten Schwellenwert (C), der von dem Typ der Modulationstechnologie der zweiten Vorrichtung (403) abhängt, wobei die Kommunikation eingerichtet wird, wenn der Signalpegel höher als der dritte Schwellenwert ist.

2. Eine erste Vorrichtung (401), die konfiguriert ist zum Durchführen der folgenden Schritte, in dieser Reihenfolge:
- Anhalten eines Modus zur Abfrage ihrer Umgebung, in dem sie sich im Lesemodus befindet, wenn der Pegel des Signals, das von einem zweiten Nahfeldkommunikationsgerät NFC empfangen wird, das im Lesemodus konfiguriert ist, einen ersten Schwellenwert (A) erreicht;
- Umschalten in einen Kartenmodus, wenn der Pegel des Signals, das von der zweiten NFC-Vorrichtung empfangen wird, einen zweiten Schwellenwert (B) erreicht, der höher ist als der erste Schwellenwert (A),
- Bestimmen des Typs der Modulationstechnologie der zweiten NFC-Vorrichtung (403) unter mehreren Typen von Modulationstechnologie;
- Vergleichen des Pegels des empfangenen Signals mit einem dritten Schwellenwert (C), abhängig von der Art der Modulationstechnologie der zweiten NFC-Vorrichtung (403), und
- Einrichten einer Transaktion (619) mit der zweiten NFC-Vorrichtung (403), wenn der Pegel des Signals, das von der ersten Vorrichtung empfangen wird, die im Kartenmodus konfiguriert ist, einen dritten Schwellenwert (C) erreicht.

3. Das Verfahren nach Anspruch 1 oder die erste Vorrichtung nach Anspruch 2, wobei der erste Schwellenwert (C) einem Schwellenwert für die Anzeige der empfangenen Signalstärke entspricht.

4. Das Verfahren nach Anspruch 1 oder 3 oder die erste Vorrichtung nach Anspruch 2 oder 3, wobei ein Wert des ersten Schwellenwerts (C) für jede Art von Modulationstechnologie der zweiten Vorrichtung in einem nichtflüchtigen Speicher der ersten Vorrichtung (401) gespeichert wird.

5. Das Verfahren nach einem der Ansprüche 1, 3 oder 4 oder die erste Vorrichtung nach einem der Ansprüche 2 bis 4, wobei dem Einrichten ein Schritt des Detektierens, durch die erste Vorrichtung (401), eines Feldes vorausgeht, das von der zweiten NFC-Vorrichtung ausgesendet wird, die im Lesemodus konfiguriert ist.

6. Das Verfahren oder die erste Vorrichtung nach Anspruch 5, wobei der Bestimmungsschritt (613) vor dem Detektionsschritt erfolgt.

7. Das Verfahren oder die erste Vorrichtung nach einem der Ansprüche 1 bis 6, wobei der zweite Schwellenwert (B) kleiner ist als der erste Schwellenwert (C).

8. Das Verfahren oder die erste Vorrichtung nach einem der Ansprüche 1 bis 7, wobei der zweite Schwellenwert (B) dem Schwellenwert der ISO 14443 Typ B Technologie entspricht.

9. Das Verfahren oder die erste Vorrichtung nach einem der Ansprüche 1 bis 7, wobei der zweite Schwellenwert (B) einem Schwellenwert einer Typ 18092 FeliCa 212kbps oder 424kbps Technologie entspricht.

10. Das Verfahren nach einem der Ansprüche 1, 3 bis 9 oder die erste Vorrichtung nach einem der Ansprüche 2 bis 9, wobei die zweite Vorrichtung (403) der ISO 14443 Typ B Technologie entspricht, wobei der erste Schwellenwert (C) einem minimalen Signalschwellenwert entspricht, der für die Einstellung einer Transaktion in der ISO 14443 Typ B Technologie erforderlich ist.

11. Das Verfahren nach einem der Ansprüche 1, 3 bis 9 oder die erste Vorrichtung nach einem der Ansprüche 2 bis 9, wobei die zweite Vorrichtung (403) der ISO 14443 Typ A Technologie entspricht, wobei der erste Schwellenwert (C) einem minimalen Signalschwellenwert entspricht, der für die Einstellung einer Transaktion in der ISO 14443 Typ A Technologie erforderlich ist.

12. Das Verfahren nach einem der Ansprüche 1, 3 bis 9 oder die erste Vorrichtung nach einem der Ansprüche 2 bis 9, wobei die zweite Vorrichtung (403) vom Typ 18092 FeliCa 212kbps Technologie ist, wobei der erste Schwellenwert (C) einem minimalen Signalschwellenwert entspricht, der für die Einstellung einer Transaktion in der Typ 18092 FeliCa 212kbps Technologie erforderlich ist.

13. Das Verfahren nach einem der Ansprüche 1, 3 bis 9 oder die erste Vorrichtung nach einem der Ansprüche 2 bis 9, wobei die zweite Vorrichtung (403) vom Typ 18092 FeliCa 424kbps Technologie ist, wobei der erste Schwellenwert (C) einem minimalen Signalschwellenwert entspricht, der für die Einstellung einer Transaktion in der Typ 18092 FeliCa 424kbps Technologie erforderlich ist.

14. Das Verfahren nach einem der Ansprüche 1, 3 bis 13 oder die erste Vorrichtung nach einem der Ansprüche 2 bis 13, wobei die erste Vorrichtung (401) ein Smartphone ist.

15. Das Verfahren nach einem der Ansprüche 1, 3 bis 14 oder die erste Vorrichtung nach einem der Ansprüche 2 bis 14, wobei die zweite Vorrichtung (403) ein Fahrkartenleseterminal ist.

## Claims

1. A method implemented by a first near field communication NFC device (401), for establishing (619) a transaction with a second NFC device (403) configured in reader mode, comprising, in order:
- a step (607) of stopping a mode of polling its surroundings, in which is the first NFC device, being first configured in reader mode, when the signal level, received from the second NFC device, reaches a first threshold (A);
- a step of switching (611) the first device to card mode when the received signal level reaches a second threshold (B), higher than first threshold (A);
- a step of determining (613), by the first device (401), the type of modulation technology of the second device (403) from among several types of modulation technology; and
- a step of comparing the level of the signal received by the first device (401) to a third threshold (C), depending on the type of modulation technology of the second device (403), the communication being established when the signal level is higher than the third threshold.

2. A first device (401) configured to perform the following steps, in order:
- stopping a mode of polling its surroundings in which it is in reader mode when the level of the signal received from a second near field communication NFC device, configured in reader mode, reaches a first threshold (A);
- switching to a card mode when the level of the signal received from the second NFC device reaches a second threshold (B), higher than first threshold (A),
- determining the type of modulation technology of the second NFC device (403), among several types of modulation technology;
- comparing the level of the received signal to a third threshold (C), depending on the type of modulation technology of the second NFC device (403), and
- establishing a transaction (619), with the second NFC device (403) when the level of the signal received by the first device, configured in card mode, reaches a third threshold (C).

3. The method according to claim 1, or the first device according to claim 2, wherein the first threshold (C) corresponds to a received signal strength indicator threshold.

4. The method according to claim 1 or 3, or the first device according to claim 2 or 3, wherein a value of the first threshold (C), for each type of modulation technology of the second device, is stored in a non-volatile memory of the first device (401).

5. The method according to any one of claims 1, 3 or 4, or the first device according to any one of claims 2 to 4, wherein the establishment is preceded a step of detection, by the first device (401), of a field emitted by the second NFC device configured in reader mode.

6. The method or first device according to claim 5, wherein the determining step (613) occurs before the detecting step.

7. The method or first device according to any of claim 1 to 6, wherein the second threshold (B) is less than the first threshold (C).

8. The method or first device according to any one of claims 1 to 7, wherein the second threshold (B) corresponds to the threshold of ISO 14443 type B technology.

9. The method or first device according to any one of claims 1 to 7, wherein the second threshold (B) corresponds to a threshold of 18092 type FeliCa 212kbps or 424kbps technology.

10. The method according to any one of claims 1, 3 to 9 or the first device according to any one of claims 2 to 9, wherein the second device (403) is of the ISO 14443 type B technology, the first threshold (C) corresponding to a minimum signal threshold required for the setting of a transaction in ISO 14443 type B technology.

11. The method according to any one of claims 1, 3 to 9 or the first device according to any one of claims 2 to 9, wherein the second device (403) is of the ISO 14443 type A technology, the first threshold (C) corresponding to a minimum signal threshold required for the setting of a transaction in ISO 14443 type A technology.

12. The method according to any one of claims 1, 3 to 9 or the first device according to any one of claims 2 to 9, wherein the second device (403) is of the 18092 type FeliCa 212 kbps technology, the first threshold (C) corresponding to a minimum signal threshold required for the setting of a transaction in 18092 type FeliCa 212 kbps technology.

13. The method according to any one of claims 1, 3 to 9 or the first device according to any one of claims 2 to 9, wherein the second device (403) is of the 18092 type FeliCa 424 kbps technology, the first threshold (C) corresponding to a minimum signal threshold required for the setting of a transaction in 18092 type FeliCa 424 kbps technology.

14. The method according to any one of claims 1, 3 to 13 or the first device of any one of claims 2 to 13, wherein the first device (401) is a smartphone.

15. The method according to any one of claims 1, 3 to 14 or the first device according to any one of claims 2 to 14, wherein the second device (403) is a transport ticket reading terminal.
